# DEMANDE DE BREVET EUROPEEN

(11) **EP 2 492 527 A1**
(43) Date de publication de la demande: **29.08.2012**
(21) Numéro de dépôt: 12156203.7
(22) Date de dépôt: 20.02.2012
(51) Int. Cl.: F16C 23/08, F16D 23/14

(54) **Butée d'embrayage de véhicule automobile**

(30) Priorité: 25.02.2011 FR 1100588
(71) Demandeur: NTN-SNR Roulements, 74000 Annecy (FR)
(72) Inventeur: Berthier, Julien, 74410 Saint Jorioz (FR)
(74) Mandataire: Sayettat, Julien Christian

(57) **Abrégé**

L'invention concerne une butée d'embrayage de véhicule automobile comprenant une bague tournante (1) et une bague fixe (2) pourvues chacune d'une piste de roulement (3, 4) formant entre elles un chemin de roulement à contact oblique dans lequel des corps roulants (5) sont disposés, au moins une piste de roulement (3, 4) d'une bague (1, 2) présentant un tronçon (12) dont la géométrie est agencée pour permettre un rotulage de ladite bague par débattement des corps roulants (5) sur ledit tronçon, ladite butée comprenant en outre un dispositif d'étanchéité comprenant un élément d'étanchéité (13) associé à une première des bagues (1, 2) pour être disposé en regard d'une portée annulaire (14) de la deuxième des bagues (2, 1), ladite butée comprenant en outre un support (17) qui est associé à une portion axiale (14a) de la portée annulaire (14) de la deuxième bague (2, 1), ledit support présentant une paroi annulaire (18) avec laquelle l'élément d'étanchéité (13) forme un jeu, ladite paroi présentant une géométrie qui est agencée pour maintenir ledit jeu lors du rotulage de la bague (1, 2).

## Description

L'invention concerne une butée d'embrayage de véhicule automobile, ladite butée comprenant une bague tournante et une bague fixe pourvues chacune d'une piste de roulement formant entre elles un chemin de roulement à contact oblique dans lequel des corps roulants sont disposés pour guider la rotation de ladite bague tournante.

L'invention concerne également un système d'actionnement de l'embrayage d'un véhicule automobile comprenant une telle butée et un dispositif de déplacement axial de ladite butée relativement au diaphragme de l'embrayage.

Selon une réalisation, le dispositif de déplacement axial de la butée peut être à commande hydraulique, notamment au moyen d'un piston, comme par exemple les dispositifs dénommés à commande concentrique hydraulique (CSC pour Concentric Slave Cylinder en anglais).

En particulier, notamment pour des raisons d'encombrement du dispositif à commande hydraulique, les butées d'embrayage utilisées dans de tels systèmes comprennent une bague extérieure tournante autour d'une bague intérieure fixe en rotation, ladite bague extérieure comprenant une portée d'actionnement permettant la mise en appui du diaphragme pour son déplacement entre une position d'embrayage et une position de débrayage.

Toutefois, le diaphragme monté sur l'ensemble côté moteur et le piston de déplacement peuvent ne pas être parfaitement concentriques. Ainsi, pour compenser ce défaut entre le diaphragme et le piston, il est connu d'utiliser un dispositif d'autocentrage qui est apte à générer un effort d'autocentrage entre ledit piston et la butée.

Par ailleurs, du fait de la liaison rigide entre la portée d'actionnement et la bague intérieure, il existe un risque de déclipsage de la butée en cas de désalignement entre ladite butée et le diaphragme. Ce risque est d'autant plus important que la baisse des coûts de fabrication des diaphragmes implique des tolérances géométriques de ceux-ci qui sont moins bonnes.

En outre, des vibrations et des oscillations sont transmises depuis le diaphragme au dispositif de déplacement par l'intermédiaire de la butée, ce qui peut conduire à une usure prématurée dudit dispositif, notamment au niveau des joints du piston hydraulique assurant le déplacement axial.

Enfin, l'appui exercé entre la portée d'actionnement et le diaphragme peut être source d'usure et de bruits, ce qu'il convient également d'éviter.

Pour résoudre ces problèmes, on connaît l'utilisation de butées d'embrayage dans lesquelles la portée d'actionnement est montée par rapport au dispositif de déplacement avec une possibilité de rotulage.

En particulier, le document FR-2 916 502 enseigne l'utilisation d'une bague d'actionnement rotulante par rapport à la bague tournante, le document FR-2 934 025 enseigne l'utilisation d'une bague rotulante de montage de la butée sur le dispositif de déplacement axial et le document US-6 997 619 enseigne l'utilisation d'une piste de roulement présentant un tronçon dont la géométrie est agencée pour permettre un rotulage de la bague tournante par débattement des corps roulants sur ledit tronçon.

Par ailleurs, les butées d'embrayage sont classiquement équipées d'un dispositif d'étanchéité du côté arrière du chemin de roulement, notamment pour limiter les fuites de lubrifiant présent dans le chemin de roulement ainsi que la contamination dudit chemin avec des polluants extérieurs.

Pour ce faire, on connaît l'utilisation d'un dispositif d'étanchéité comprenant une armature rigide qui est associée sur une portée annulaire d'une première des bagues et un élément d'étanchéité fixé à ladite armature pour être disposé avec un jeu par rapport à une portée annulaire de la deuxième des bagues. En particulier, le jeu peut être négatif pour disposer l'élément d'étanchéité en contact frottant sur la portée annulaire ou être positif pour former une chicane entre ledit élément d'étanchéité et ladite portée.

Toutefois, cette réalisation ne donne pas satisfaction lorsqu'elle est utilisée en relation avec une butée d'embrayage rotulante dans laquelle l'écartement entre les portées annulaires varie lors du rotulage. En effet, le jeu d'étanchéité n'est alors plus assuré de façon optimale puisque, en fonction de l'angle de rotulage, il va varier. En particulier, lorsque l'élément d'étanchéité est en contact frottant, celui-ci peut être décollé de la portée sans assurer l'étanchéité ou comprimé sur ladite portée en induisant son usure prématurée.

Pour résoudre ce problème, le document FR-2 936 033 propose une bague fixe dont la portée de frottement présente une géométrie en forme de tronçon de sphère. Toutefois, cette réalisation limite la possibilité d'association, notamment par emmanchement axial, d'un support au niveau de la portée de frottement, comme cela est pourtant nécessaire lorsqu'on souhaite équiper la butée d'un moyen de précontrainte exerçant un effort axial de précharge sur la bague fixe.

L'invention vise notamment à résoudre ce problème en proposant une butée d'embrayage combinant de façon optimale les fonctions de rotulage et d'étanchéité, et ce sans contraindre la géométrie de réalisation des bagues.

A cet effet, et selon un premier aspect, l'invention propose une butée d'embrayage de véhicule automobile comprenant une bague tournante et une bague fixe pourvues chacune d'une piste de roulement formant entre elles un chemin de roulement à contact oblique dans lequel des corps roulants sont disposés pour guider la rotation de ladite bague tournante, au moins une piste de roulement d'une bague présentant un tronçon dont la géométrie est agencée pour permettre un rotulage de ladite bague par débattement des corps roulants sur ledit tronçon, ladite butée comprenant en outre un dispositif d'étanchéité d'un côté du chemin de roulement, ledit dispositif comprenant un élément d'étanchéité associé à une première des bagues pour être disposé en regard d'une portée annulaire de la deuxième des bagues, ladite butée comprenant en outre un support qui est associé à une portion axiale de la portée annulaire de la deuxième bague, ledit support présentant une paroi annulaire avec laquelle l'élément d'étanchéité forme un jeu, ladite paroi présentant une géométrie qui est agencée pour maintenir ledit jeu lors du rotulage de la bague.

Selon un deuxième aspect, l'invention propose un système d'actionnement de l'embrayage d'un véhicule automobile comprenant un diaphragme, ledit système comprenant une telle butée et un dispositif de déplacement axial de ladite butée entre une position d'embrayage dans laquelle la bague tournante est disposée contre le diaphragme et une position de débrayage dans laquelle ladite bague appuie sur ledit diaphragme.

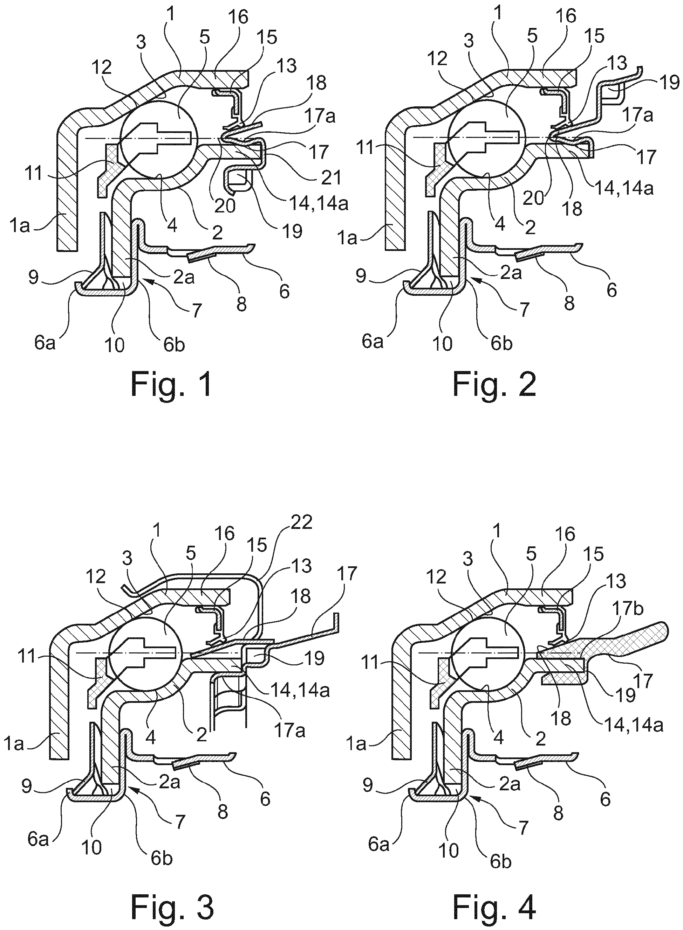

D'autres objets et avantages de l'invention apparaîtront dans la description qui suit, faite en référence aux figures 1 à 4 annexées qui sont des vues partielles en coupe longitudinale d'une butée d'embrayage selon respectivement un mode de réalisation de l'invention.

En relation avec les figures, on décrit ci-dessous une butée d'embrayage de véhicule automobile qui est destinée à être intégrée dans un système d'actionnement de l'embrayage d'un véhicule automobile comprenant un diaphragme (non représenté).

Dans une telle réalisation, le débrayage est réalisé par appui sur le diaphragme par l'intermédiaire de la butée. Pour ce faire, le système d'actionnement comprend un dispositif de déplacement axial (non représenté) de la butée entre une position d'embrayage et la position de débrayage.

La butée d'embrayage comprend une bague tournante 1 et une bague fixe 2 pourvues chacune d'une piste de roulement 3, 4 formant entre elles un chemin de roulement à contact oblique dans lequel des corps roulants 5 sont disposés pour guider la rotation de ladite bague tournante. Sur les figures, un seul côté de la butée est représenté, l'autre côté étant symétrique par rapport à son axe de révolution.

Dans les modes de réalisation représentés, la bague extérieure 1 est tournante autour d'une bague intérieure 2 qui est fixe en rotation, lesdites bagues étant réalisées en tôle emboutie pour présenter chacune une piste de roulement 3, 4. Dans cette description, les termes de positionnement dans l'espace sont pris en référence à l'axe de rotation de la bague extérieure 1. En particulier, le terme « intérieur » est relatif à une disposition proche de cet axe et le terme « extérieur » est relatif à une disposition à distance de cet axe. Par ailleurs, les termes « avant » et « arrière » sont relatifs à une disposition par rapport au sens de déplacement de la butée vers la position de débrayage, à savoir à gauche sur les figures pour « avant » et à droite pour « arrière ».

La bague 2 fixe en rotation est destinée à être déplacée en translation axiale par l'intermédiaire d'un piston hydraulique du dispositif de déplacement. Pour ce faire, la bague intérieure 2 est disposée autour d'un manchon 6 de montage sur le dispositif de déplacement axial, par exemple sur la tige d'un piston, ou en coulissement sur un arbre du système d'actionnement. Dans les modes de réalisation représentés, le manchon 6 comprend un logement axial 7 dans lequel l'extrémité du piston peut être disposée, ledit logement étant pourvu de griffes 8 afin d'assurer la retenue.

Par ailleurs, la bague intérieure 2 est montée sur le manchon 6 par l'intermédiaire d'un dispositif d'autocentrage qui est apte à générer un effort d'autocentrage entre le manchon 6 et la butée. Dans le mode de réalisation représenté, le dispositif d'autocentrage comprend une rondelle élastique 9, par exemple une rondelle de type Belleville ou une rondelle comprenant une pluralité d'ondes axiales, de sorte à générer l'effort d'autocentrage entre le manchon 6 et la bague intérieure 2.

La rondelle 9 est d'une part en appui sur l'avant d'une portée radiale 2a de la bague intérieure 2 et d'autre part en blocage axial arrière contre un repli radial 6a qui est formé sur une portée axiale du manchon 6. Par ailleurs, la surface de la portée radiale 2a qui est opposée à la rondelle 9 est en appui axial sur une portée radiale 6b du manchon 6.

Ainsi, par mise en appui de la portée radiale 2a sur l'extrémité du piston qui est reçue dans le logement 7, un effort axial d'autocentrage est établi entre la bague intérieure 2 et ledit piston. Par ailleurs, un jeu radial 10 est formé entre l'extrémité intérieure de la portée radiale 2a et le manchon 6 de sorte à permettre l'autocentrage par déplacement radial de la bague intérieure 2 relativement au manchon 6 et donc au piston.

La bague extérieure 1 présente une portée d'actionnement 1a par appui sur le diaphragme de l'embrayage afin d'actionner ledit diaphragme par l'intermédiaire de ladite portée. Ainsi, en position d'embrayage, la portée d'actionnement 1 a peut être disposée contre le diaphragme sans exercer un effort d'appui pour le débrayage et, en position de débrayage, la portée 1a appuie sur ledit diaphragme. Dans les modes de réalisation représentés, la portée d'actionnement 1a est formée par une extension radiale avant de la bague extérieure 1. En variante, la portée d'actionnement 1a peut être rapportée sur la bague extérieure 1, par exemple sous la forme d'une bague ou d'un insert.

Le chemin de roulement réalisé entre les pistes 3, 4 est à contact oblique dans le sens d'application de l'effort de déplacement de la butée en position de débrayage. Par ailleurs, des corps roulants formés de billes 5 sont disposés pour guider la rotation de la bague extérieure 1 et transmettre les efforts exercés sur chacune des bagues 1, 2, lesdites billes étant équiréparties dans le chemin de roulement par l'intermédiaire d'une cage 11.

Pour permettre le rotulage de la bague extérieure 1 par rapport à la bague intérieure 2, au moins une piste de roulement 3, 4 d'une bague 1, 2 présente un tronçon 12 dont la géométrie est adaptée pout permettre le débattement des corps roulants 5 sur ledit tronçon.

Dans les modes de réalisation représentés, la piste de roulement 3 de la bague extérieure 1 présente un tronçon 12 dont la géométrie sphérique est centrée sur l'axe de symétrie de la bague extérieure 1. En particulier, cette réalisation permet le basculement de la bague extérieure 1 par rapport à la bague intérieure 2, notamment sur une course angulaire de l'ordre de 5°, de sorte à ajuster la position de l'axe de la bague extérieure 1 par rapport à celui de la bague intérieure 2.

Ainsi, lors du déplacement axial de la butée en position de débrayage, la portée d'actionnement 1a appuie sur le diaphragme avec possibilité pour la bague extérieure 1 de rotuler par rapport à la bague intérieure 2 de sorte à compenser les éventuels désalignements entre la butée et le diaphragme.

En outre, la possibilité de rotulage de la bague extérieure 1 permet une filtration des efforts transmis par l'intermédiaire de la butée, notamment des vibrations et des oscillations potentiellement endommageantes pour le dispositif de déplacement. En outre, sur la course de rotulage, les efforts sont amortis, notamment relativement aux chocs entre la portée d'actionnement 1a et le diaphragme.

La butée comprend également un dispositif d'étanchéité d'un côté du chemin de roulement, notamment du côté arrière qui est opposé à la portée d'actionnement 1a, pour limiter les fuites de lubrifiant présent dans le chemin de roulement ainsi que la contamination dudit chemin avec des polluants extérieurs.

Le dispositif d'étanchéité comprend un élément d'étanchéité 13 associé à une première des bagues 1, 2 pour être disposé en regard radial d'une portée annulaire 14 de la deuxième des bagues 2, 1. En particulier, le dispositif d'étanchéité peut comprendre une armature rigide 15, par exemple réalisée en tôle emboutie, et un élément d'étanchéité 13 qui peut être réalisé en matériau souple, par exemple en élastomère, fixé à ladite armature notamment par surmoulage. Ainsi, l'armature 15 permet le montage du dispositif d'étanchéité dans la butée et l'élément d'étanchéité 13 est destiné à venir en contact frottant d'étanchéité. En variante l'élément d'étanchéité 13 peut être destiné à former une chicane.

Dans les modes de réalisation représentés, l'armature 15 présente une paroi annulaire axiale qui est associée par emmanchement sur une portée annulaire axiale 16 de la bague extérieure 1. En particulier, la portée annulaire 16 prolonge vers l'arrière le tronçon sphérique 12 qui est prolongé vers l'avant par la portée radiale 1a d'actionnement. L'armature 15 présente également une paroi annulaire radiale sur laquelle l'élément d'étanchéité 13 est disposé, ledit élément d'étanchéité étant également disposé sur la paroi axiale pour étanchéifier l'emmanchement.

L'élément d'étanchéité 13 présente au moins une lèvre qui s'étend intérieurement à la portée radiale de l'armature 15 de sorte à être disposée en regard d'une portée annulaire 14 de la bague intérieure 2 pour former un jeu, ledit jeu pouvant être négatif pour que la lèvre soit en contact frottant sur la portée 14 ou positif pour former une chicane entre ladite lèvre et ladite portée. Dans les modes de réalisation représentés, l'élément d'étanchéité 13 comprend deux lèvres présentant un contact inversé afin de limiter l'introduction de polluants et les fuites de lubrifiant.

La butée comprend un support 17 qui est associé à une portion axiale 14a de la portée annulaire 14 de la bague intérieure 2. En particulier, le caractère axial de la portion 14a permet de bénéficier d'une géométrie cylindrique qui facilite l'association du support 17. Dans les modes de réalisation représentés, l'ensemble de la portée annulaire 14 de la bague intérieure 2 s'étend axialement. Plus précisément, la portée axiale 14 prolonge vers l'arrière la piste de roulement 4 qui est prolongée vers l'avant par la portée radiale 2a de montage.

En relation avec les figures 1 à 3, le support 17 présente une paroi annulaire axiale 17a d'emmanchement sur la portée axiale 14 et, en relation avec la figure 4, le support 17 présente une gorge 17b dans laquelle la portion d'extrémité de la portée axiale 14 est associée.

Le support 17 présente une paroi annulaire 18 avec laquelle les lèvres de l'élément d'étanchéité 13 forment un jeu positif ou négatif. La paroi 18 présente une géométrie, notamment une inclinaison, qui est agencée pour maintenir le jeu lors du rotulage de la bague extérieure 1. En particulier, la géométrie peut être agencée pour que le jeu demeure sensiblement constante lors du rotulage, afin d'éviter un décollement trop important desdites lèvres sans assurer l'étanchéité ainsi qu'une usure prématurée desdites lèvres par compression trop importante sur ladite paroi.

Ainsi, la réalisation décrite permet de conserver une géométrie classique pour la bague intérieure 2, notamment relativement à la présence d'une portée axiale 14 d'emmanchement du support 17, tout en optimisant la fonction d'étanchéité lors du rotulage.

En relation avec les figures, la paroi annulaire 18 présente une géométrie conique divergente de l'avant vers l'arrière, la longueur de la paroi 18 ainsi que l'angle de divergence étant adaptés pour maintenir le contact frottant lors du rotulage. En variante, la paroi annulaire 18 peut présenter une géométrie sphérique qui est centrée sur l'axe de symétrie de la bague intérieure 2. En particulier, les géométries sphériques du tronçon 12 et de la paroi 18 peuvent être centrées sur le même point en présentant des rayons différents afin de maintenir le jeu d'étanchéité lors du rotulage.

De façon avantageuse, le support 17 présente une couronne 19 d'appui d'un moyen de précontrainte, par exemple formé d'un ressort (non représenté), exerçant un effort axial de précharge sur la butée de sorte que la portée d'actionnement 1a en position d'embrayage soit disposée contre le diaphragme.

En relation avec les figures 1 à 3, le support 17 est réalisé en matériau métallique et présente une portée axiale 17a d'emmanchement sur la surface extérieure (figure 1 et 2) ou intérieure (figure 3) de la portée axiale 14, un repli radial étant formé au niveau de l'emmanchement pour améliorer la tenue axiale.

Sur les figures 1 et 2, la paroi annulaire 18 est raccordée à la portée axiale 17a par un coude 20 afin que ladite paroi entoure ladite portée. La couronne 19 d'appui peut être disposée à l'intérieur de la portée axiale 14 (figure 1) en étant reliée à elle par une portée radiale 21 ou être formée dans le prolongement de la paroi annulaire 18 (figure 2) pour être disposée à l'extérieur de la portée axiale 14, notamment entre les portées 14, 16.

En relation avec la figure 3, la paroi annulaire 18 peut être rapportée sur le support 17, par exemple par soudure laser. En outre, le support 17 peut présenter un déflecteur 22 qui entoure au moins partiellement la portée annulaire 16 de la bague extérieure 1 afin de contribuer à l'étanchéité du chemin de roulement.

Sur la figure 4, le support 17 est réalisé par moulage, par exemple d'un matériau thermoplastique, pour présenter la paroi annulaire 18, une gorge d'association 17b et une portée radiale 19 formant la couronne d'appui du moyen de précontrainte.

## Revendications

1. Butée d'embrayage de véhicule automobile comprenant une bague tournante (1) et une bague fixe (2) pourvues chacune d'une piste de roulement (3, 4) formant entre elles un chemin de roulement à contact oblique dans lequel des corps roulants (5) sont disposés pour guider la rotation de ladite bague tournante, au moins une piste de roulement (3, 4) d'une bague (1, 2) présentant un tronçon (12) dont la géométrie est agencée pour permettre un rotulage de ladite bague par débattement des corps roulants (5) sur ledit tronçon, ladite butée comprenant en outre un dispositif d'étanchéité d'un côté du chemin de roulement, ledit dispositif comprenant un élément d'étanchéité (13) associé à une première des bagues (1, 2) pour être disposé en regard d'une portée annulaire (14) de la deuxième des bagues (2, 1), ladite butée étant **caractérisée en ce qu'**elle comprend en outre un support (17) qui est associé à une portion axiale (14a) de la portée annulaire (14) de la deuxième bague (2, 1), ledit support présentant une paroi annulaire (18) avec laquelle l'élément d'étanchéité (13) forme un jeu, ladite paroi présentant une géométrie qui est agencée pour maintenir ledit jeu lors du rotulage de la bague (1, 2).

2. Butée d'embrayage selon la revendication 1, **caractérisée en ce que** la paroi annulaire (18) présente une géométrie conique.

3. Butée d'embrayage selon la revendication 1, **caractérisée en ce que** la paroi annulaire (18) présente une géométrie sphérique qui est centrée sur un axe de symétrie de la deuxième bague (2, 1).

4. Butée d'embrayage selon l'une quelconque des revendications 1 à 3, **caractérisée en ce que** le tronçon (12) présente une géométrie sphérique qui est centrée sur un axe de symétrie de la bague (1, 2) dont la piste de roulement (3, 4) présente ledit tronçon.

5. Butée d'embrayage selon l'une quelconque des revendications 1 à 4, **caractérisée en ce que** la bague (1, 2) dont la piste de roulement (3, 4) présente le tronçon (12) est la première bague (1, 2).

6. Butée d'embrayage selon l'une quelconque des revendications 1 à 5, **caractérisée en ce qu'**elle comprend en outre un manchon (6) de montage, la bague fixe (2) présentant une portée radiale (2a) qui est en appui axial sur ledit manchon par l'intermédiaire d'un dispositif d'autocentrage.

7. Butée d'embrayage selon l'une quelconque des revendications 1 à 6, **caractérisée en ce que** la bague tournante (1) présente une portée (1a) d'actionnement par appui sur un diaphragme de l'embrayage.

8. Butée d'embrayage selon l'une quelconque des revendications 1 à 7, **caractérisée en ce que** la bague extérieure (1) est tournante et la bague intérieure (2) est fixe.

9. Butée d'embrayage selon l'une quelconque des revendications 1 à 8, **caractérisée en ce que** la première bague (1) est tournante.

10. Butée d'embrayage selon l'une quelconque des revendications 1 à 9, **caractérisée en ce que** le support (17) présente une couronne (19) d'appui d'un moyen de précontrainte exerçant un effort axial de précharge sur la butée.

11. Butée d'embrayage selon l'une quelconque des revendications 1 à 10, **caractérisée en ce que** la paroi annulaire (18) est rapportée sur le support (17).

12. Butée d'embrayage selon l'une quelconque des revendications 1 à 11, **caractérisée en ce que** le support (17) présente un déflecteur (22) qui entoure au moins partiellement la première bague (1, 2).

13. Système d'actionnement de l'embrayage d'un véhicule automobile comprenant un diaphragme, ledit système comprenant une butée selon l'une quelconque des revendications 1 à 12 et un dispositif de déplacement axial de ladite butée entre une position d'embrayage dans laquelle la bague tournante (1) est disposée contre le diaphragme et une position de débrayage dans laquelle ladite bague appuie sur ledit diaphragme.
